# EUROPEAN PATENT SPECIFICATION

(11) **EP 1 104 787 B1**
(45) Date of publication and mention of the grant of the patent: **12.05.2004**
(21) Application number: 00310508.7
(22) Date of filing: 27.11.2000
(51) Int. Cl.: C08L 83/04, C08L 83/14, C08K 3/26

(54) **Room temperature curable silicone rubber composition**
Bei Umgebungstemperatur härtende Silikonkautschukzusammensetzungen
Compositions de caoutchouc de silicone durcissable à température ambiante

(30) Priority: 29.11.1999 JP 33809099
(43) Date of publication of application: 06.06.2001
(73) Proprietor: Dow Corning Toray Silicone Co., Ltd., Tokyo (JP)
(72) Inventor: Adachi, Hiroshi, Dow Corning Toray Sil. Co., Ltd., Ichihara-shi, Chiba Prefecture (JP); Sato, Norio, Dow Corning Toray Sil. Co., Ltd., Ichihara-shi, Chiba Prefecture (JP)
(74) Representative: Kyle, Diana

(56) References cited:
- EP-A- 0 438 221
- EP-A- 0 543 615

## Description

The present invention relates to a room temperature curable silicone rubber composition and in particular to a room temperature curable silicone rubber composition that is superior in storage stability and, upon curing, is capable of forming silicone rubber of superior adhesive durability. By virtue of superior weatherability and other characteristics upon curing, room temperature curable silicone rubber compositions have found many uses as sealing materials in the field of construction and civil engineering. Numerous such silicone rubber compositions have been proposed in the past. For example, a composition that uses a hydroxyl-terminated dimethylpolysiloxane, a light calcium carbonate powder, and a trialkoxysilane as the main ingredients and cures in the presence of a condensation reaction-accelerating catalyst, such as titanium ethylacetoacetate has been described in Japanese Patent Application No. Hei 05-230377. In addition, a composition which uses an alkoxysilylalkylsiloxy-terminated diorganopolysiloxane, a light calcium carbonate powder, and a trialkoxysilane as the main ingredients and cures in the presence of a condensation reaction-accelerating catalyst, such as titanium ethylacetoacetate has been described in Japanese Patent Application No. 07-70551.

The defect of the former composition, however, consisted in its poor storage stability, which resulted in polymer degradation that gradually took place and made the composition impossible to cure when it was placed in a container and stored over an extended period of time. The defect of the latter composition was that while possessing superior storage stability, it was poor in adhesive durability. In addition, another problem with this type of room temperature curable silicone rubber composition was that when used as a sealing material for transparent base materials such as glass, its adhesive properties with respect to the base material deteriorated over time, and, as a result, with extended use, the sealant peeled off the base material and was unable to fulfill its functions.

As a result of in-depth investigations aimed at eliminating the above-described problems, the authors of the present invention have discovered that the above-described problems can be eliminated if a special type of light calcium carbonate is compounded with a room temperature curable silicone rubber composition that uses a light calcium carbonate as the main ingredient. Namely, it is an object of the present invention to provide a room temperature curable silicone rubber composition that has superior storage stability, superior adhesive durability upon curing, and is capable of maintaining bond strength even if used outdoors over an extended period of time.

EP-A-0438221 describes a moisture curing silicone sealant which adheres to a variety of substrates is produced by a method which first mixes a trialkoxysilethylene endblocked polydiorganosiloxane, a trialkoxysilane crosslinker, and a beta-dicarbonyl titanium catalyst, then adds a precipitated calcium carbonate filler having a fatty acid treated surface. EP-A-0438221 discloses that the surface area of the filler has a distinct effect upon the adhesion obtained and that treated calcium carbonates having a surface area of over 22m²/g give good adhesion to a variety of substrates.

The present invention is a room temperature curable silicone rubber composition comprising
(A) 100 parts by weight of a diorganopolysiloxane with a viscosity of 20 mPa·s to 1,000,000 mPa·s at 25°C having organic groups at both terminal ends of the molecular chain described by formula 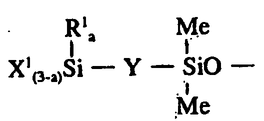 where R¹ is a monovalent hydrocarbon group, X¹ is a hydrolyzable group, and Y is a divalent hydrocarbon group, an oxygen atom, or a group represented by the formula : 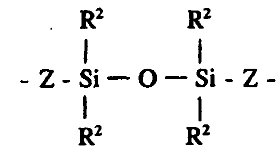 where Z is a divalent hydrocarbon group and R² is a monovalent hydrocarbon group; and a is 0, 1, or 2;
(B) 50 parts by weight to 200 parts by weight of a light calcium carbonate having a specific surface area by the BET method of from 10 m²/g to 18 m²/g,
(C) 1 part by weight to 100 parts by weight of a heavy calcium carbonate having a specific surface area by the BET method of 8 m²/g or less,
(D) 1 part by weight to 25 parts by weight of a hydrolyzable group-containing silane or a product of its partial hydrolysis and condensation described by formula

   R³ _{b}SiX² _{4-b}

   where R³ is a monovalent hydrocarbon group, X² is a hydrolyzable group, and b is 0 or 1, and
(E) 0.01 parts by weight to 10 parts by weight of a cure-accelerating catalyst.

The invention is illustrated by reference to the accompanying drawing in which:

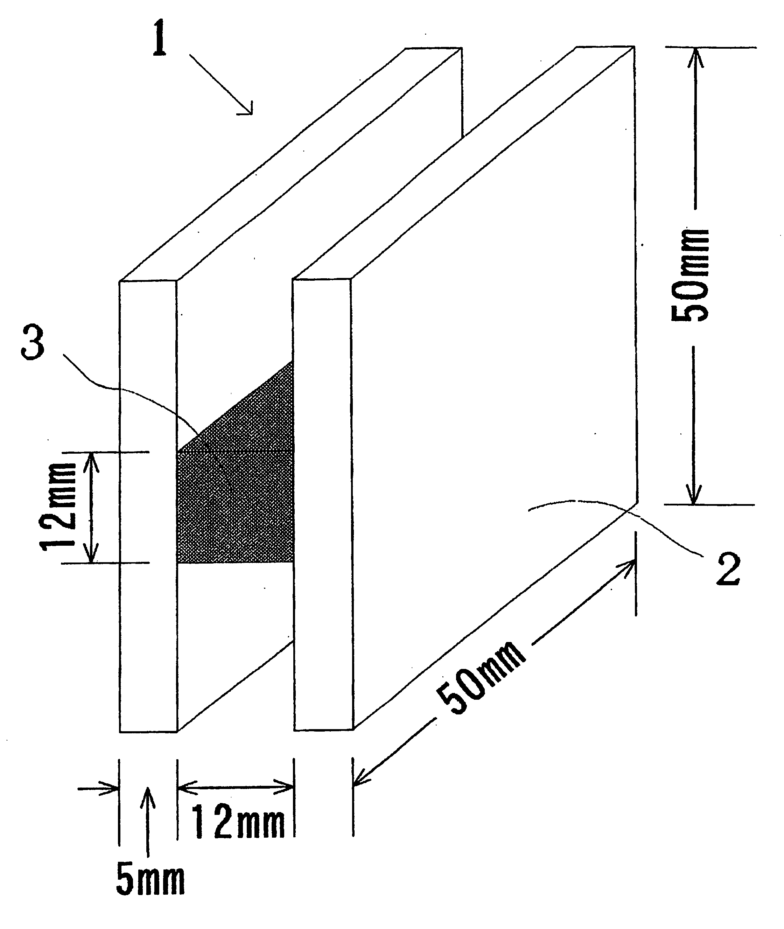

FIG. 1 is a schematic drawing of an adhesive durability test specimen used for the evaluation of the adhesive durability of the room temperature curable silicone rubber composition in Application Examples 1∼4 and Comparative Examples 1∼3 herein. Keys:
   1. Adhesive durability test specimen.
   2. Float sheet glass.
   3. Silicone rubber.

The present invention is a room temperature curable silicone rubber composition comprising
(A) 100 parts by weight of a diorganopolysiloxane with a viscosity of 20 mPa·s to 1,000,000 mPa·s at 25°C having organic groups at both terminal ends of the molecular chain described by formula 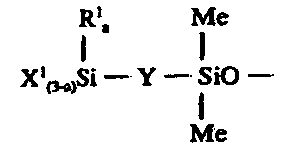 where R¹ is a monovalent hydrocarbon group, X¹ is a hydrolyzable group, and Y is a divalent hydrocarbon group or an oxygen atom, or a group represented by the formula 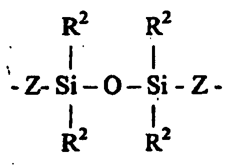 where Z is a divalent hydrocarbon group and R² is a monovalent hydrocarbon group; and a is 0, 1 or 2;
(B) 50 parts by weight to 200 parts by weight of a light calcium carbonate having a specific surface area by the BET method of from 10 m²/g to 18m²/g,
(C) 1 part by weight to 100 parts by weight of a heavy calcium carbonate having a specific surface area by the BET method of 8 m²/g or less,
(D) 1 part by weight to 25 parts by weight of a hydrolyzable group-containing silane or a product of its partial hydrolysis and condensation described by formula

   R³ _{b}SiX² _{4-b}

   where R³ is a monovalent hydrocarbon group, X² is a hydrolyzable group, and b is 0 or 1, and
(E) 0.01 parts by weight to 10 parts by weight of a cure-accelerating catalyst.

To explain the above in greater detail, the diorganopolysiloxane of component (A) is the main ingredient of the present composition. Component (A) is a diorganopolysiloxane with a viscosity of from 20 mPa·s to 1,000,000 mPa·s at 25°C having at both terminal ends of the molecular chain organic groups described by formula 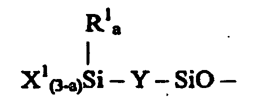 where R¹ is a monovalent hydrocarbon groups, X¹ is a hydrolyzable group, Y is a divalent hydrocarbon group or an oxygen atom, and a is 0, 1, or 2; or by formula 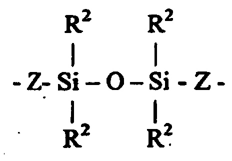 where R² is a monovalent hydrocarbon group and Z is a divalent hydrocarbon group.

In the above formulas, the monovalent hydrocarbon groups represented by R¹ and R² are exemplified by methyl, ethyl, propyl, butyl and other alkyl groups and vinyl, allyl, and other alkenyl groups. The hydrolyzable groups represented by X¹ are exemplified by groups such as alkoxy, ketoximo, acyloxy, and aminoxy. In general, it is preferred that X¹ be alkoxy or alkoxy-substituted alkyl groups. The alkoxy groups are exemplified by methoxy, ethoxy, butoxy, and other alkoxy groups and the alkoxy-substituted alkyl groups are exemplified by methoxyethyl, ethoxyethyl, methoxypropyl, and methoxybutyl. In addition, the divalent hydrocarbon groups represented by Y and Z are exemplified by methylene, ethylene, propylene and other alkylene groups. The viscosity of component (A) should be in the range of from 20 mPa·s to 1,000,000 mPa·s at 25°C, with 1,000 mPa·s to 100,000 mPa·s being preferable. Additionally, a diorganopolysiloxane with one of the terminals rendered inert with a trimethylsiloxy or dimethylvinylsiloxy group, or a diorganopolysiloxane with both terminals rendered inert with a trimethylsiloxy or dimethylvinylsiloxy group may be contained in the present component for the purpose of viscosity regulation and for the purpose of regulating crosslinking density upon curing.

The light calcium carbonate of component (B) is used to impart mechanical strength to the present composition. Component (B) is also called precipitated calcium carbonate. Usually component (B) is obtained by the dehydration and drying of a light calcium carbonate slurry obtained by reacting dense lime with carbonic acid gas. It is necessary that component (B) used in the present invention should be a light calcium carbonate with a specific surface area by the BET method of at least 10 m²/g and up to 18 m²/g. In addition, a calcium carbonate surface treated with a fatty acid disperses better in component (A), which is desirable, because excellent viscosity characteristics are then obtained. The light calcium carbonate is commercially available, for example, from Shiraishi Kogyo Kaisha, Ltd., Japan, under the trade name of Hakuenka CC, or from Maruo Calcium Co., Ltd., Japan, under the trade name of KARUFAIN 200, and thus can be obtained on the market.

The amount of component (B) in the present composition should be between 50 parts by weight and 200 parts by weight per 100 parts by weight of component (A), with 70 parts by weight to 150 parts by weight being preferable. The reason for this is that when the amount is less than 50 parts by weight, the present composition exhibits sagging, and mechanical properties necessary for its use as a construction sealing material are not obtained. On the other hand, when the amount of component (B) exceeds 200 parts by weight, the viscosity of the present composition becomes excessively high, and its convenient application as a construction sealing material presents a problem.

The heavy calcium carbonate of component (C) used in the present composition is essential for imparting adhesive durability. The heavy calcium carbonate is also called ground calcium carbonate and is usually produced by grinding white limestone and classifying the resultant ground material. It is necessary that component (C) should be a heavy calcium carbonate with a specific surface area by the BET method of 8 m²/g or less. Also, it is preferable that component (C) should be a heavy calcium carbonate surface treated with a fatty acid. In addition, it is preferable that component (C) have an oil absorption value (JIS K5101) in the range of from 15 mL/100g to 40 mL/100g. Such heavy calcium carbonate is commercially available from Toyo Fine Chemicals Co., Ltd., Japan, under the trade name of WHITON P-30, or from Maruo Calcium Co., Ltd., Japan, under the trade name NANOKKUSU #30, and thus can be easily obtained on the market.

The amount of component (C) added to the present composition should be in the range of from 1 part by weight to 100 parts by weight per 100 parts by weight of component (A), with 5 parts by weight to 50 parts by weight being preferable. The reason for this is that when the amount is less than 1 part by weight, improvement in adhesive durability cannot be expected, and, when the amount exceeds 100 parts by weight, the present composition's convenient application as a construction sealing material presents a problem.

The weight ratio of component (B) to component (C) is preferably between 1:1 and 1:0.01, more preferably, in the range of from 1:0.70 to 1:0.05, and, even more preferably, in the range of from 1:0.40 to 1:0.03.

Component (D) of the present composition is a crosslinking agent described by formula R³_{b}SiX²_{4-b}, where R³ is a monovalent hydrocarbon group exemplified by methyl, ethyl, propyl, butyl and other alkyl groups and vinyl, allyl, and other alkenyl groups. X² is a hydrolyzable group exemplified by methoxy, ethoxy, propoxy, butoxy, and other alkoxy groups; methoxyethyl, ethoxyethyl, methoxypropyl, methoxybutyl, and other alkoxy-substituted alkyl groups; isopropenoxy, 1-ethyl-2-methylvinyl oxime, and other alkenyloxy groups; dimethyl ketoxime, methylethyl ketoxime, and other ketoxime groups; acetoxy, propionoxy, butyloyloxy, benzoyloxime, and other acyloxy groups; dimethylamino, diethylamino, and other amino groups; dimethylaminoxy, diethylaminoxy, and other aminoxy groups; and N-methylacetamido, N-ethylacetamido, N-methylbenzamido and other amido groups. Preferred is when X² is an alkoxy group or alkoxy-substituted alkyl group.

Component (D) is exemplified by methyltrimethoxysilane, methyltriethoxysilane, ethyltrimethoxysilane, ethyltriethoxysilane, butyltrimethoxysilane, butyltriethoxysilane, vinyltrimethoxysilane, phenyltrimethoxysilane, and other trifunctional alkoxysilanes; tetramethoxysilane, tetraethoxysilane, tetrapropoxysilane, and other tetrafunctional alkoxysilanes; methyltris(methoxyethoxy)silane, methyltripropenoxysilane, methyltriacetoxysilane, vinyltriacetoxysilane, methyltri(butanoxime)silane, vinyltri(butanoxime)silane, phenyltri(butanoxime)silane, propyltri(butanoxime)silane, tetra(butanoxime)silane, 3,3,3-trifluoropropyl(butanoxime)silane, 3-chloropropyl(butanoxime)silane, methyltri(propanoxime)silane, methyltri(pentanoxime)silane, methyltri(isopentanoxime)silane, vinyl(cyclopentanoxime)silane, methyltri(cyclohexanoxime)silane, and products of their partial hydrolysis.

To serve as component (D), these compounds can be used either singly or by mixing two or more of the compounds. The amount of component (D) added to the present composition is in the range of from 1 part by weight to 25 parts by weight, or, preferably, 2 parts by weight to 10 parts by weight, per 100 parts by weight of component (A). This is due to the various problems, such as the insufficient curing of the composition, increased viscosity, and a tendency towards gelling in storage which occur if the amount is too small, or the retardation of curing which occurs if the amount is too large.

Component (E) is a catalyst used to cure the present composition. Component (E) can be, for example, tetraisopropoxy titanium, tetra-t-butoxy titanium, titanium di(isopropoxy)bis(ethylacetoacetate), titanium di(isopropoxy)bis(acetylacetonate), and other organotitanium compounds; dibutyltin dilaurate, dibutyltin bisacetylacetonate, tin octylate, and other organotin compounds; lead dioctylate and other dicarboxylic acid salts of metals; zirconium tetracetylacetonate, and other organozirconium compounds; aluminum triacetylacetonate and other organoaluminum compounds; and hydroxylamine, tributylamine, and other amines. Preferred is when component (E) is an organotitanium compounds. The amount of component (E) added to the present composition should be in the range of from 0.01 parts by weight to 10 parts by weight, or, preferably, from 0.1 parts by weight to 5 parts by weight, per 100 parts by weight of component (A). The reason for this is that when the amount is too small, the curing of the present composition becomes slower, and when the amount is too large, its storage stability may deteriorate, or its physical properties as a rubber upon curing may be impaired.

The present composition comprising the above-mentioned components (A)∼(E) may in addition contain silane coupling agents, such as amino-containing organotrialkoxysilanes, epoxy-containing organotrialkoxysilanes, and mercapto-containing organotrialkoxysilanes further improve adhesion to base materials. The silane coupling agents can be used singly or in a combination of two or more silane coupling agents. In addition, a reaction mixture of an organic amine or an amino-containing organotrialkoxysilane with an epoxy-containing organotrialkoxysilane may be used. Among the above-mentioned components, amino-containing silane coupling agents are particularly effective, producing considerable adhesion-enhancing effects. In addition, dimethyldimethoxysilane, diphenyldimethoxysilane, and other bifunctional alkoxysilanes may be added to the present composition in order to lower the modulus of the rubber elastic material upon curing.

The present composition comprising the above-mentioned components (A)∼(E) may in addition contain various ingredients known to be compounded with room temperature curable silicone rubber compositions, for example, fumed silica, precipitation silica, quartz micropowder, fumed titanium dioxide, diatomaceous earth, aluminum hydroxide powder, alumina powder, magnesium powder, zinc oxide powder, zinc carbonate powder, and other inorganic fillers; organic solvents, mildew-proofing agents, flame retardants, heat resistance agents, plasticizers, thixotropic property-imparting agents, adhesive property-imparting agents, cure-accelerating agents, and pigments so long as such additions are not detrimental to the object of the present invention.

The present composition can be easily produced by uniformly mixing components (A)∼(E), and, if necessary, various other additives, under conditions shielded from moisture. The thus obtained composition is then placed in a hermetically closed container for storage, and when exposed to the ambient air at the time of use, it is cured by action of the moisture present in the air, turning into a silicone rubber possessing rubber elasticity.

Due to the fact that the present composition is characterized in that even if it is exposed to the elements outdoors for an extended period of time, its adhesive properties do not deteriorate, it is extremely effective for applications requiring such properties, for example, for use in construction sealing materials, and, especially, construction sealing materials applied to substrates transmitting light, such as glass.

### Application Examples

The present invention will now be described in more detail by means of the following application examples. In the application examples, "Me" designates a methyl group, "Et" designates an ethyl group, and viscosity is a value measured at 25°C. The evaluation of the adhesive durability of the room temperature curable silicone rubber composition was carried out in accordance with the following method.

### Method for evaluating adhesive durability of room temperature curable silicone rubber composition.

Adhesive durability test specimens were fabricated by the method defined in JIS A1439, "Testing Methods for Sealants for Sealing and Glazing in Buildings." Namely, to make an adhesive durability test specimen (commonly called an H-type test specimen) shown in FIG. 1, the space between two float glass sheets (float sheet glass as defined in JIS R3202) was filled with the room temperature curable silicone rubber composition. Subsequently, the room temperature curable silicone rubber composition was cured by allowing it to stand for 28 days at a temperature of 23°C and a humidity of 50%. Then, the test specimen was placed in a fluorescent UV enhanced type accelerated exposure testing device (from R. B. Atlas Inc., trade name UVCON UC-1) and irradiated with UV light through the glass of the adhesive durability test specimen using a UVA-340 fluorescent lamp in accordance with ASTM G53. Upon lapse of 500 hours and 1000 hours of irradiation, the adhesive durability test specimen was removed from the apparatus and subjected to tensile strength testing in accordance with JIS A1439, observing the rupture mode of the silicone rubber. The rupture mode was represented in accordance with the following three types.
- CF: Cohesive failure (rupture 100% within the silicone rubber layer)
- tCF: Thin layer cohesive failure (rupture within silicone rubber layer in the vicinity of the interface with the adherent)
- AF: Adhesive failure (peeling along the interface of the silicone rubber layer and the adherent)

For sealing materials used for various applications in the field of construction and civil engineering, it is necessary that the percentage of CF on the rupture surface after 1000 hours of irradiation with UV light should be at least 70%, with at least 80% being preferred

### Method for evaluating storage stability of room temperature curable silicone rubber composition.

A plastic cartridge was filled with the room temperature curable silicone rubber composition and stored for 4 weeks, 8 weeks, and 12 weeks at a temperature of 40°C and a humidity of 40%. The hardness of the cured product of the room temperature curable silicone rubber composition after storage was measured in accordance with the method defined in JIS K6253 and compared with its hardness prior to storage (initial period). Physical properties are considered to be stable if the change in hardness is within ±20% as compared with the initial period. Additionally, for sealing materials used for various applications in the field of construction and civil engineering, it is necessary that, under such conditions, the material should be stable for 8 weeks, and it is preferable that it should be stable for 12 weeks.

**Application Example 1.** A room temperature curable silicone rubber composition was prepared by adding 100 parts by weight of light calcium carbonate with a specific surface area by the BET method of 18 m²/g surface treated with a fatty acid (the calcium carbonate had been prepared by the precipitation method and its surface had been treated with a fatty acid), 25 parts by weight of ground calcium carbonate with a specific surface area by the BET method of 5.8 m²/g surface treated with a fatty acid (the calcium carbonate had been prepared by the grinding method and its surface had been treated with a fatty acid), 2.8 parts by weight of methyltrimethoxysilane and 2.8 parts by weight of isobutyltrimethoxysilane as crosslinking agents, 2.5 parts by weight of titanium di(isopropoxy)-bis(ethylacetoacetate) as a curing catalyst, and 1 part by weight of a reaction mixture of γ-aminopropyltrimethoxysilane and γ-glycidoxypropyltrimethoxysilane (a mixture obtained by mixing γ-aminopropyltrimethoxysilane and γ-glycidoxypropyltrimethoxysilane in a 1:2 mole ratio and allowing it to stand for 4 weeks at room temperature and a humidity of 50%) as an adhesion promoter to 65 parts by weight of α,ω-di(triethoxysilylethylene)dimethylpolysiloxane with a viscosity of 60,000 mPa·s described by formula 1 below and 35 parts by weight of α,ω-di(trimethylsiloxy)dimethylpolysiloxane with a viscosity of 100 mPa·s described by formula 2 below and uniformly mixing them under conditions shielded from moisture. The storage stability and adhesive durability of the room temperature curable silicone rubber composition were measured and are given in Table 1 and Table 2.

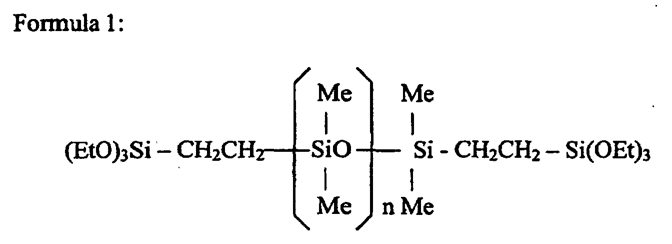

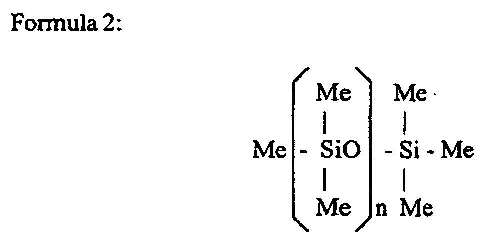

**Application Example 2.** Except for using 25 parts ground calcium carbonate with a specific surface area by the BET method of 3.4 m²/g which had not been surface treated with a fatty acid instead of 25 parts ground calcium carbonate with a specific surface area by the BET method of 5.8 m²/g surface treated with a fatty acid, as was done in Application Example 1, a room temperature curable silicone rubber composition was prepared in the same manner as in Application Example 1. The storage stability and adhesive durability of the room temperature curable silicone rubber composition were measured and the results are given in Table 1 and Table 2.

**Application Example 3.** Except for using 25 parts ground calcium carbonate with a specific surface area by the BET method of 3.4 m²/g surface treated with a fatty acid instead of 25 parts ground calcium carbonate with a specific surface area by the BET method of 5.8 m²/g surface treated with a fatty acid, as was done in Application Example 1, a room temperature curable silicone rubber composition was prepared in the same manner as in Application Example 1. The storage stability and adhesive durability of the room temperature curable silicone rubber composition were measured and the results are provided in Table 1 and Table 2.

Application Example 4. A room temperature curable silicone rubber composition was prepared by combining 40 parts by weight of α,ω-di(triethoxysilylethylene)dimethylpolysiloxane with a viscosity of 15,000 mPa·s, 34 parts by weight of α-methyl-ω-triethoxysilylethylenedimethylpolysiloxane with a viscosity of 15,000 mPa·s described by formula 3 below, 26 parts by weight of α,ω-di(trimethylsiloxy)dimethylpolysiloxane with a viscosity of 100 mPa·s described by the above-mentioned formula 2, 110 parts by weight of precipitated calcium carbonate with a specific surface area by the BET method of 18 m²/g surface treated with a fatty acid, 10 parts by weight of ground calcium carbonate with a specific surface area by the BET method of 1 m²/g which had not been surface treated with a fatty acid, 2.8 parts by weight of methyltrimethoxysilane and 2.8 parts by weight of isobutyltrimethoxysilane as crosslinking agents, 2.5 parts by weight of titanium di(isopropoxy)-bis(ethylacetoacetate) as a curing catalyst, and 0.5 parts by weight of a reaction mixture of γ-aminopropyltrimethoxysilane and γ-glycidoxypropyltrimethoxysilane (a mixture obtained by mixing γ-aminopropyltrimethoxysilane and γ-glycidoxypropyltrimethoxysilane in a 1:2 mole ratio and allowing it to stand for 4 weeks at room temperature and a humidity of 50%) as an adhesion promoter and uniformly mixing them under conditions shielded from moisture. The storage stability and adhesive durability of the room temperature curable silicone rubber composition were measured and the results are provided in Table 1 and Table 2.

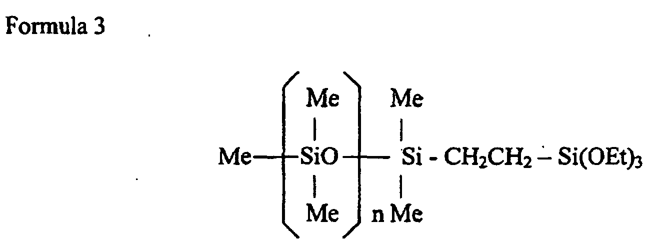

Comparative Example 1. A room temperature curable silicone rubber composition was prepared in the same manner as in Application Example 1, except that 25 parts ground calcium carbonate with a specific surface area by the BET method of 5.8 m²/g surface treated with a fatty acid, which was added in Application Example 1, was not added this time, but instead 25 parts light calcium carbonate with a specific surface area by the BET method of 18 m²/g surface treated with a fatty acid was used. The storage stability and adhesive durability of the room temperature curable silicone rubber composition were measured in the same manner as in Application Example 1 and the results are provided in Table 1 and Table 2.

Comparative Example 2. A room temperature curable silicone rubber composition was prepared in the same manner as in Application Example 4, except that 25 parts ground calcium carbonate with a specific surface area by the BET method of 1 m²/g surface treated with a fatty acid, which was added in Application Example 4, was not added this time, but instead 25 parts light calcium carbonate with a specific surface area by the BET method of 18 m²/g surface treated with a fatty acid was used. The storage stability and adhesive durability of the room temperature curable silicone rubber composition were measured in the same manner as in Application Example 1 and the results are provided in Table 1 and Table 2.

Comparative Example 3. A room temperature curable silicone rubber composition was prepared in the same manner as in Application Example 1, except that α,ω-dihydroxydimethylpolysiloxane with a viscosity of 60000 mPa·s was used instead of the α,ω-di(triethoxysilylethylene)dimethylpolysiloxane with a viscosity of 60,000 mPa·s used in Application Example 1. The storage stability of the room temperature curable silicone rubber composition was measured in the same manner as in Application Example 1 and the results are provided in Table 1.

**Table 1**

| Storage stability (hardness) | | | | | | | |
|---|---|---|---|---|---|---|---|
| | Application Examples | | | | Comparative Examples | | |
| Storage Time | 1 | 2 | 3 | 4 | 1 | 2 | 3 |
| 0 hours (initial period) | 29 | 30 | 29 | 24 | 29 | 23 | 25 |
| 4 weeks | 32 | 29 | 29 | 23 | 29. | 23 | 21 |
| 8 weeks | 29 | 26 | 27 | 23 | 25 | 21 | 8 |
| 12 weeks | 25 | 25 | 25 | 21 | 25 | 19 | Not cured |

**Table 2**

| Adhesive durability | | | | | | | |
|---|---|---|---|---|---|---|---|
| Time of UV irradiation | Rupture mode | Application Examples | | | | Comparative Examples | |
| | | 1 | 2 | 3 | 4 | 1 | 2 |
| 0 hours (initial period) | CF (%) | 95 | 94 | 96 | 97 | 96 | 93 |
| | tCF (%) | 0 | 0 | 0 | 0 | 0 | 0 |
| | AF (%) | 5 | 6 | 4 | 3 | 4 | 7 |
| 500 hours | CF (%) | 89 | 100 | 100 | 100 | 53 | 35 |
| | tCF (%) | 9 | 0 | 0 | 0 | 20 | 65 |
| | AF (%) | 2 | 0 | 0 | 0 | 22 | 0 |
| 1000 hours | CF (%) | 85 | 100 | 85 | 85 | 50 | 25 |
| | tCF (%) | 13 | 0 | 15 | 15 | 45 | 50 |
| | AF (%) | 2 | 0 | 0 | 0 | 10 | 25 |

## Claims

1. A room temperature curable silicone rubber composition comprising
(A) 100 parts by weight of a diorganopolysiloxane with a viscosity of 20 mPa·s to 1,000,000 mPa·s at 25°C having organic groups at both terminal ends of the molecular chain described by formula : 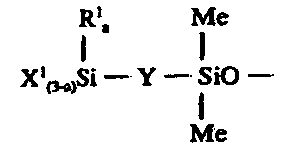 where R¹ is a monovalent hydrocarbon group, X' is a hydrolyzable group, and Y is a divalent hydrocarbon group, an oxygen atom, or a group represented by the formula : 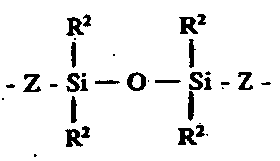 where Z is a divalent hydrocarbon group and R² is a monovalent hydrocarbon group; and a is 0, 1, or 2;
(B) 50 parts by weight to 200 parts by weight of a light calcium carbonate having a specific surface area by the BET method of from 10 m²/g to 18 m²/g,
(C) 1 part by weight to 100 parts by weight of a heavy calcium carbonate having a specific surface area by the BET method of 8 m²/g or less,
(D) 1 part by weight to 25 parts by weight of a hydrolyzable group-containing silane or a product of its partial hydrolysis and condensation described by formula
R³ _{b}SiX² _{4-b}
where R³ is a monovalent hydrocarbon group, X² is a hydrolyzable group, and b is 0 or 1, and
(E) 0.01 parts by weight to 10 parts by weight of a cure-accelerating catalyst.

2. The room temperature curable silicone rubber composition according to Claim 1, where X¹ of component (A) and X² of component (D) are alkoxy groups.

3. The room temperature curable silicone rubber composition according to Claim 1 or 2, where (Y) of component (A) is a divalent hydrocarbon group.

4. The room temperature curable silicone rubber composition according to any of Claims 1 to 3, where component (B) has been surface treated with a fatty acid.

5. The room temperature curable silicone rubber composition according to any of Claims 1 to 4, where component (C) has been surface treated with a fatty acid.

6. The room temperature curable silicone rubber composition according to any of Claims 1 to 5, where component (E) is an organotitanium compound.

7. The room temperature curable silicone rubber composition according to any of Claims 1 to 6, where the weight ratio of component (B) to component (C) is within the range of from 1:1 to 1:0.01.

8. The room temperature curable silicone rubber composition according to any of Claims 1 to 7, where the viscosity of component (A) is in the range of from 1000 mPa.s to 100,000 mPa.s at 25°C.

9. The room temperature curable silicone rubber composition according to any of Claims 1 to 8, comprising 70 parts by weight to 150 parts by weight of component (B).

10. The room temperature curable silicone rubber composition according to any of Claims 1 to 9, comprising 5 parts by weight to 50 parts by weight of component (C).

11. The room temperature curable silicone rubber composition according to any of Claims 1 to 10, where the weight ratio of component (B) to component (C) is within the range of from 1:0.4 to 1:0.03.

12. The room temperature curable silicone rubber composition according to Claim 11, where the weight ratio of component (B) to component (C) is in the range from 1:0.70 to 1:0.05.

13. The room temperature curable silicone rubber composition according to any of Claims 1 to 12, comprising 2 parts by weight to 10 parts by weight of component (D).

14. The room temperature curable silicone rubber composition according to any of Claims 1 to 13, comprising as component (E) 0.1 part by weight to 5 part by weight of an organotitanium compound.

## Patentansprüche

1. Raumtemperaturhärtbare Siliconkautschukzusammensetzung, enthaltend
(A) 100 Gewichtsteile eines Diorganopolysiloxans mit einer Viskosität von 20 mPa·s bis 1.000.000 mPa·s bei 25°C, das an beiden Enden der Molekülkette organische Gruppen, beschrieben durch Formel: 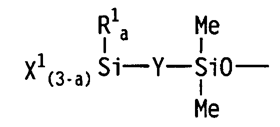 aufweist, wobei R¹ eine monovalente Kohlenwasserstoffgruppe ist, X¹ eine hydrolysierbare Gruppe ist und Y eine divalente Kohlenwasserstoffgruppe, ein Sauerstoffatom oder eine Gruppe, dargestellt durch die Formel: 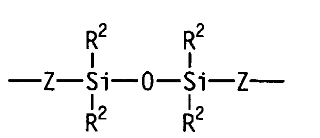 ist, wobei Z eine divalente Kohlenwasserstoffgruppe ist und R² eine monovalente Kohlenwasserstoffgruppe ist, und a gleich 0, 1 oder 2 ist;
(B) 50 Gewichtsteile bis 200 Gewichtsteile eines leichten Calciumcarbonats mit einer spezifischen Oberfläche nach dem BET-Verfahren von 10 m²/g bis 18 m²/g;
(C) 1 Gewichtsteil bis 100 Gewichtsteile eines schweren Calciumcarbonats mit einer spezifischen Oberfläche nach dem BET-Verfahren von 8 m²/g oder weniger;
(D) 1 Gewichtsteil bis 25 Gewichtsteile eines Silans, das eine hydrolysierbare Gruppe enthält, oder eines Produkts seiner partiellen Hydrolyse und Kondensation, beschrieben durch Formel
R³ _{b}SiX² _{4-b},
wobei R² eine monovalente Kohlenwasserstoffgruppe ist, X² eine hydrolysierbare Gruppe ist und b gleich 0 oder 1 ist, und
(E) 0,01 Gewichtsteil bis 10 Gewichtsteile eines härtungsbeschleunigenden Katalysators.

2. Raumtemperaturhärtbare Siliconkautschukzusammensetzung nach Anspruch 1, wobei X¹ der Komponente (A) und X² der Komponente (D) Alkoxygruppen sind.

3. Raumtemperaturhärtbare Siliconkautschukzusammensetzung nach Anspruch 1 oder 2, wobei (Y) der Komponente (A) eine divalente Kohlenwasserstoffgruppe ist.

4. Raumtemperaturhärtbare Siliconkautschukzusammensetzung nach einem der Ansprüche 1 bis 3, wobei Komponente (B) mit einer Fettsäure oberflächenbehandelt worden ist.

5. Raumtemperaturhärtbare Siliconkautschukzusammensetzung nach einem der Ansprüche 1 bis 4, wobei Komponente (C) mit einer Fettsäure oberflächenbehandelt worden ist.

6. Raumtemperaturhärtbare Siliconkautschukzusammensetzung nach einem der Ansprüche 1 bis 5, wobei Komponente (E) eine Organotitanverbindung ist.

7. Raumtemperaturhärtbare Siliconkautschukzusammensetzung nach einem der Ansprüche 1 bis 6, wobei das Gewichtsverhältnis von Komponente (B) zu Komponente (C) im Bereich von 1:1 bis 1:0,01 liegt.

8. Raumtemperaturhärtbare Siliconkautschukzusammensetzung nach einem der Ansprüche 1 bis 7, wobei die Viskosität der Komponente (A) im Bereich von 1000 mPa·s bis 100.000 mPa·s bei 25°C liegt.

9. Raumtemperaturhärtbare Siliconkautschukzusammensetzung nach einem der Ansprüche 1 bis 8, die 70 Gewichtsteile bis 150 Gewichtsteile Komponente (B) enthält.

10. Raumtemperaturhärtbare Siliconkautschukzusammensetzung nach einem der Ansprüche 1 bis 9, die 5 Gewichtsteile bis 50 Gewichtsteile Komponente (C) enthält.

11. Raumtemperaturhärtbare Siliconkautschukzusammensetzung nach einem der Ansprüche 1 bis 10, wobei das Gewichtsverhältnis von Komponente (B) zu Komponente (C) im Bereich von 1:0,4 bis 1:0,03 liegt.

12. Raumtemperaturhärtbare Siliconkautschukzusammensetzung nach Anspruch 11, wobei das Gewichtsverhältnis von Komponente (B) zu Komponente (C) im Bereich von 1:0,70 bis 1:0,05 liegt.

13. Raumtemperaturhärtbare Siliconkautschukzusammensetzung nach einem der Ansprüche 1 bis 12, die 2 Gewichtsteile bis 10 Gewichtsteile Komponente (D) enthält.

14. Raumtemperaturhärtbare Siliconkautschukzusammensetzung nach einem der Ansprüche 1 bis 13, die als Komponente (E) 0,1 Gewichtsteile bis 5 Gewichtsteile einer Organotitanverbindung enthält.

## Revendications

1. Composition de caoutchouc de silicone durcissable à température ambiante comprenant
(A) 100 parties en poids d'un diorganopolysiloxane avec une viscosité de 20 mPa.s à 1 000 000 mPa.s à 25°C ayant des groupes organiques au niveau des deux terminaisons de la chaîne moléculaire, décrit par la formule 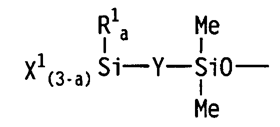 où R¹ représente un groupe hydrocarboné monovalent, X¹ représente un groupe hydrolysable, et Y représente un groupe hydrocarboné divalent, un atome d'oxygène, ou un groupe représenté par la formule : 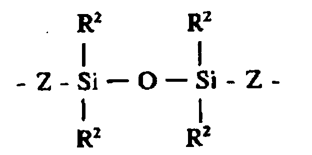 où Z représente un groupe hydrocarboné divalent et R² représente un groupe hydrocarboné monovalent ; et a est égal à 0, 1, ou 2 ;
(B) de 50 parties en poids à 200 parties en poids d'un carbonate de calcium léger ayant une surface spécifique par la méthode BET de 10 m²/g à 18 m²/g,
(C) de 1 partie en poids à 100 parties en poids d'un carbonate de calcium lourd ayant une surface spécifique par la méthode BET de 8 m²/g ou moins,
(D) de 1 partie en poids à 25 parties en poids d'un silane contenant un groupe hydrolysable ou d'un produit de son hydrolyse partielle et de sa condensation, décrit par la formule
R³ _{b}SiX² _{4-b}
où R³ représente un groupe hydrocarboné monovalent, X² représente un groupe hydrolysable, et b est égal à 0 ou 1, et
(E) de 0,01 partie en poids à 10 parties en poids d'un catalyseur accélérant le durcissement.

2. Composition de caoutchouc de silicone durcissable à température ambiante selon la revendication 1, dans laquelle le groupe X¹ du composant (A) et le groupe X² du composant (D) sont des groupes alcoxy.

3. Composition de caoutchouc de silicone durcissable à température ambiante selon la revendication 1 ou 2, dans laquelle le groupe (Y) du composant (A) est un groupe hydrocarboné divalent.

4. Composition de caoutchouc de silicone durcissable à température ambiante selon l'une quelconque des revendications 1 à 3, dans laquelle la surface du composant (B) a été traitée avec un acide gras.

5. Composition de caoutchouc de silicone durcissable à température ambiante selon l'une quelconque des revendications 1 à 4, dans laquelle la surface du composant (C) a été traitée avec un acide gras.

6. Composition de caoutchouc de silicone durcissable à température ambiante selon l'une quelconque des revendications 1 à 5, dans laquelle le composant (E) est un composé organotitane.

7. Composition de caoutchouc de silicone durcissable à température ambiante selon l'une quelconque des revendications 1 à 6, dans laquelle le rapport pondéral du composant (B) au composant (C) se situe dans l'intervalle de 1/1 à 1/0,01.

8. Composition de caoutchouc de silicone durcissable à température ambiante selon l'une quelconque des revendications 1 à 7, où la viscosité du composant (A) se situe dans l'intervalle de 1000 m.Pa.s à 100 000 mPa.s à 25°C.

9. Composition de caoutchouc de silicone durcissable à température ambiante selon l'une quelconque des revendications 1 à 8, comprenant de 70 parties en poids à 150 parties en poids de composant (B).

10. Composition de caoutchouc de silicone durcissable à température ambiante selon l'une quelconque des revendications 1 à 9, comprenant de 5 parties en poids à 50 parties en poids de composant (C).

11. Composition de caoutchouc de silicone durcissable à température ambiante selon l'une quelconque des revendications 1 à 10, dans laquelle le rapport pondéral du composant (B) au composant (C) se situe dans l'intervalle de 1/0,4 à 1/0,03.

12. Composition de caoutchouc de silicone durcissable à température ambiante selon la revendication 11, dans laquelle le rapport pondéral du composant (B) au composant (C) se situe dans l'intervalle de 1/0,70 à 1/0,05.

13. Composition de caoutchouc de silicone durcissable à température ambiante selon l'une quelconque des revendications 1 à 12, comprenant de 2 parties en poids à 10 parties en poids de composant (D).

14. Composition de caoutchouc de silicone durcissable à température ambiante selon l'une quelconque des revendications 1 à 13, comprenant comme composant (E) de 0,1 partie en poids à 5 parties en poids d'un composé organotitane.
